# EUROPÄISCHE PATENTANMELDUNG

(11) **EP 0 924 149 A2**
(43) Veröffentlichungstag der Anmeldung: **23.06.1999**
(21) Anmeldenummer: 98123594.8
(22) Anmeldetag: 10.12.1998
(51) Int. Cl.: B65G 53/30

(54) **Verfahren zum hydraulischen Fördern eines Schüttgutes**

(30) Priorität: 15.12.1997 DE 19755733
(71) Anmelder: Waeschle GmbH, 88250 Weingarten (DE)
(72) Erfinder: Stark, Bernhard Dr., 88272 Fronreute (DE)
(74) Vertreter: Prietsch, Reiner, Dipl.-Ing.

(57) **Zusammenfassung**

Ein Verfahren zum hydraulischen Fördern einer Schüttgutdispersion in einer Förderleitung (1), der eine Förderpumpe (10) vorgeschaltet ist, an deren Druckseite ein Teil der Förderflüssigkeit entnommen wird (11), ist besonders effizient, wenn entweder der Volumenstrom des entnommenen Teils der Förderflüssigkeit als Stellgröße in Abhängigkeit vom Volumenstrom oder Druck der Förderleitung als Regelgröße verändert wird, oder/und wenn die Dispersion stromauf der Förderpumpe (10) aus einem einstellbaren Schüttgutstrom und einer einstellbaren Flüssigkeitsmenge hergestellt wird, wobei letztere auch zumindest einen Teil der auf der Druckseite der Förderpumpe entnommenen Förderflüssigkeit umfaßt.

## Beschreibung

Die Erfindung betrifft ein Verfahren zum hydraulischen Fördern eines Schüttgutes von einem Aufgabeort zu einer Zielort.

Aus der Dissertation "Hydraulische Förderung von Eis zum Kühlen von Bergwerken", TU Hannover, 1991, ist eine Versuchsanlage zur hydraulischen Förderung eines Gemisches aus Eis und Wasser bekannt. Sie umfaßt im wesentlichen eine ringförmig geschlossene Rohrleitung, die von einer Vakuum-Eismaschine mit einer Dispersion aus Eis und Wasser beschickt wird, deren Gehalt an Eis relativ gering ist. Zur Erhöhung des Eisgehaltes wird die Dispersion mittels einer Kreiselpumpe mit geringer strömungsgeschwindigkeit im Kreis gepumpt und der Rohrleitung währenddessen über ein integriertes Siebrohr ein Volumenstrom an Wasser entnommen, der gleich dem Volumenstrom der von der Vakuum-Eismaschine gelieferten Eis-/Wasserdispersion ist. Der entnommene Volumenstrom wird zur Vakuum-Eismaschine zurückgeführt. Ist der gewünschte Eisgehalt erreicht, wird die Pumpleistung erhöht, bis die für die Versuchsdurchführung gewünschte Strömungsgeschwindigkeit erreicht ist. Dem Eisgehalt der Dispersion sind jedoch relativ niedrige Grenzen gesetzt, weil die Leistung der Kreiselpumpe mit zunehmendem Eis-, das heißt Feststoffgehalt, immer weiter abnimmt. Daher läßt sich aus der Versuchsanlage kein Verfahren zum wirtschaftlichen hydraulischen Fördern eines Schüttgutes von einem Aufgabeort zu einem Zielort ableiten.

Aus der EP 0 194 498 B1 sind ein Verfahren und eine Vorrichtung zum taktweisen hydraulischen Fördern von Trüben bekannt. Die Vorrichtung besteht aus einem Trübensammelbehälter mir zugeordneter Trübenfüllpumpe, einem Flüssigkeitsspeicher mit einer Flüssigkeitspumpe, eine Anzahl paralleler Dosierkammern und einer Förderleitung. Diese Komponenten der Vorrichtung sind über einzeln absperrbare Leitungen miteinander verbunden. Die Dosierkammern werden abwechselnd aus dem Trübensammelbehälter von der Trübenfüllpumpe entgegen der Förderrichtung mit der Trübe befüllt. Dabei kann ein Teil der flüssigen Bestandteile der Trübe über eine der Dosierkammer zugeordnete, mit einem Sieb versehen Verdichtungskammer mittels einer Strahlpumpe abgesaugt und dem Flüssigkeitsspeicher zugeführt werden. Auf diese Weise läßt sich die Feststoffkonzentration erhöhen. Durch Verändern der Stellung der Absperrorgane in den Leitungen wird die Trübenfüllung anschließend mittels eines von der Flüssigkeitspumpe dem Flüssigkeitsspeicher entnommenen Flüssigkeitsstroms aus dem Dosierraum in Förderrichtung in die Förderleitung gepreßt. Bei der nachfolgenden, entgegengerichteten, neuerlichen Befüllung des Dosierraums mit Trübe wird die Flüssigkeit aus der Dosierkammer in den Flüssigkeitsspeicher zurückgedrückt. Bei diesem Verfahren wird die den Förderdruck erzeugende Flüssigkeitspumpe nur von feststoffreier Flüssigkeit durchströmt. Außerdem fördert die nur einen geringen Druck erzeugende Trübenfüllpumpe die Trübe mit einem Feststoffgehalt, der deutlich geringer ist als der Feststoffgehalt der Trübe in der Förderleitung. Nachteilig an diesem Verfahren sind der erhebliche apparative Aufwand zu seiner Durchführung sowie das taktweise Einleiten des Förderstroms in die Förderleitung.

Der Erfindung liegt die Aufgabe zugrunde, ein wirtschaftliches Verfahren zur hydraulischen Förderung eines Schüttgutes von einem Aufgabeort zu einem Zielort mittels einer Förderleitung zu schaffen.

Diese Aufgabe ist erfindungsgemäß gelöst durch Herstellen einer Dispersion aus dem Schüttgut und einer Förderflüssigkeit, anschließendes kontinuierliches Einspeisen der Dispersion in eine Förderpumpe, deren Druckseite mit dem Anfang der Förderleitung verbunden ist und Entnehmen eines Teils der Förderflüssigkeit zwischen der Förderpumpe und dem Anfang der Förderleitung.

Der Erfindung liegt die Erkenntnis zugrunde, daß sich zwar zahlreiche, bisher pneumatisch transportierte Schüttgüter auch hydraulisch in Form einer Dispersion transportieren lassen würden, jedoch die zum Fördern verwendbaren Pumpen den Feststoffgehalt der Dispersion auf einen Wert beschränken, der deutlich unterhalb des Wertes liegt, bei dem eine Dispersion auch über eine längere Entfernung mittels einer Förderleitung störungsfrei und wirtschaftlich transportiert werden könnte. Anders ausgedrückt, würde die Beschränkung des Feststoffgehaltes der Dispersion infolge der bei höheren Gehalten rasch abnehmenden Förderhöhe gebräuchlicher Pumpen dazu führen, daß über die Förderleitung ein auf letztere bezogen unnötig großer Volumenstrom an Förderflüssigkeit transportiert werden müßte, was wiederum den Einsatz von Förderleitungen mit unwirtschaftlich großem Nenndurchmesser notwendig machen würde.

Das Verfahren nach der Erfindung führt hingegen zu einer Aufkonzentration der Dispersion am Beginn der Förderleitung, die daher bei gleicher stündlicher Schüttgutförderleistung nur einen entsprechend kleineren Nenndurchmesser benötigt.

Soweit das Schüttgut nicht bereits in Form einer Dispersion vorliegt, werden zum Herstellen der Dispersion vorzugsweise ein einstellbarer Schüttgutstrom und eine einstellbare Flüssigkeitsmenge kontinuierlich in einen Behälter eingeleitet, dessen Füllstand geregelt wird (Anspruch 2). Der Schüttgutstrom und die Flüssigkeitsmenge werden dabei zweckmäßig auf Werte eingestellt, die zu einer Dispersion mit einem Feststoffgehalt führt, bei dem die verwendete Förderpumpe am wirtschaftlichsten arbeitet.

Der entnommene Teil der Förderflüssigkeit kann beim Herstellen der Dispersion erneut verwendet werden (Anspruch 3). Zum Beispiel kann dieser entnommene Teil der Förderflüssigkeit in einen Vorlagebehälter, der die einstellbare Flüssigkeitsmenge zum Herstellen der Dispersion liefert, zurückgeführt werden. Auch eine direkte Rückführung in den Behälter zum Herstellen der Dispersion ist möglich.

Zur Überbrückung kurzzeitiger Unterbrechungen der hydraulischen Förderung des Schüttgutstromes und/oder der dem Behälter zugeführten Flüssigkeitsmenge kann das Volumen des Behälters als Puffervolumen verwendet werden (Anspruch 4). Der Behälter erfüllt dann auch die Funktion eines Zwischenspeichers.

Die Menge des entnommenen Teils der Förderflüssigkeit kann in Abhängigkeit von dem Füllstand des Behälters verändert werden (Anspruch 5). Hierdurch kann eine zumindest in Grenzen selbstregelnde Aufkonzentration der Dispersion stromab der Pumpe erreicht werden, denn sinkt beispielsweise der Füllstand in dem Behälter, so signalisiert dies eine geringere als die gewünschte Konzentration der Dispersion, weil die Förderleistung beispielsweise einer Kreiselpumpe mit abnehmendem Feststoffgehalt zunimmt. In diesem Fall ist es sinnvoll, die Aufkonzentration stromab der Förderpumpe durch Erhöhen der Menge des entnommenen Teils der Förderflüssigkeit zu steigern.

Zweckmäßig werden der Schüttgutstrom und die Flüssigkeitsmenge, die in den Behälter eintreten, einzeln oder gemeinsam in Abhängigkeit von dem Füllstand verändert (Anspruch 6). Insbesondere bei gemeinsamer und verhältnisgleicher Änderung läßt sich neben der Konstanthaltung des Füllstandes auch der Feststoffgehalt bzw. die Konzentration der Dispersion in dem Behälter konstant halten.

Mit Vorteil kann auch die Förderleistung der Förderpumpe in Abhängigkeit von dem Füllstand des Behälters verändert werden (Anspruch 7). Diese Art der Regelung des Füllstandes des Behälter ist regelungstechnisch besonders einfach.

Die Förderleistung der Förderpumpe kann insbesondere durch Verändern eines Bypasstromes in einem die Druckseite mit der Saugseite der Förderpumpe verbindenden Bypass verändert werden (Anspruch 8). Der Bypasstrom kann entweder in Abhängigkeit von dem Füllstand des Behälters oder in Abhängigkeit von einem anderen Parameter, z.B. dem in der Förderleitung herrschenden Förderzustand oder auch dem Schüttgutbedarf am Zielort, verändert werden. Äquivalent hierzu, jedoch anlagentechnisch aufwendiger, ist die Veränderung der Förderleistung der Förderpumpe durch entsprechende Änderung der Leistung des Pumpenantriebs.

Eine bequeme Möglichkeit zur Regelung des Füllstands des Behälters besteht unter Umständen darin, den entnommenen Teil der Förderflüssigkeit in zwei Volumenströme aufzuteilen, von denen einer dem Behälter zugeführt und in Abhängigkeit von dem Füllstand verändert wird (Anspruch 9).

Zur Optimierung oder auch zur Veränderung der in der Förderleitung herrschenden Transportbedingungen können der Schüttgutgehalt der Dispersion (Anspruch 10), der Druck der Dispersion (Anspruch 11) oder der Volumenstrom der Dispersion (Anspruch 12) jeweils stromab der Förderpumpe auf einen vorgegebenen Wert geregelt werden.

Die jeweilige Regelgröße (Schüttgutgehalt, Druck, Volumenstrom) kann zweckmäßig durch Verändern des entnommenen Teils der Förderflüssigkeit als Stellgröße geregelt werden (Anspruch 13). Auf diese Weise läßt sich z.B. auch einer Verstopfung der Förderleitung durch rasches Senken des entnommenen Teils der Förderflüssigkeit und eine entsprechend schnelle Senkung der Konzentration der Dispersion vorbeugen.

Sofern die Dispersion aus Schüttgut und Förderflüssigkeit verfahrenstechnisch bedingt stromauf der Pumpe mit einem sehr niedrigen Gehalt anfällt, wird die Förderkapazität der Förderpumpe besser ausgenutzt, wenn der Schüttgutgehalt der Dispersion stromauf der Förderpumpe auf einen vorgegebenen Wert geregelt wird (Anspruch 14), der etwa gleich dem für die Pumpe günstigsten Wert ist.

Eine solche Aufkonzentration kann aus den gleichen Gründen auch zwischen dem Behälter zur Herstellung der Dispersion und der Förderpumpe wirtschaftlich sinnvoll sein. Dann wird zwischen dem Behälter und der Förderpumpe ein weiterer Teil der Förderflüssigkeit entnommen (Anspruch 15).

Vor allem bei großen Schwankungen der Konzentration stromauf der Pumpe kann es empfehlenswert sein, den Schüttgutgehalt des weiteren, entnommenen Teils der Förderflüssigkeit auf einen vorgegebenen Wert zu regeln (Anspruch 16).

Das Verfahren nach dem vorliegenden Vorschlag wird anhand der schematisch aufzufassenden Zeichnung näher erläutert. Es zeigt:
- Fig. 1: ein erstes Ausführungsbeispiel einer Anlage zum hydraulischen Fördern eines Schüttgutes nach dem hier vorgeschlagenen Verfahren;
- Fig. 2 bis 8: weitere Ausführungsbeispiele und Verbesserungen einer solchen Anlage.

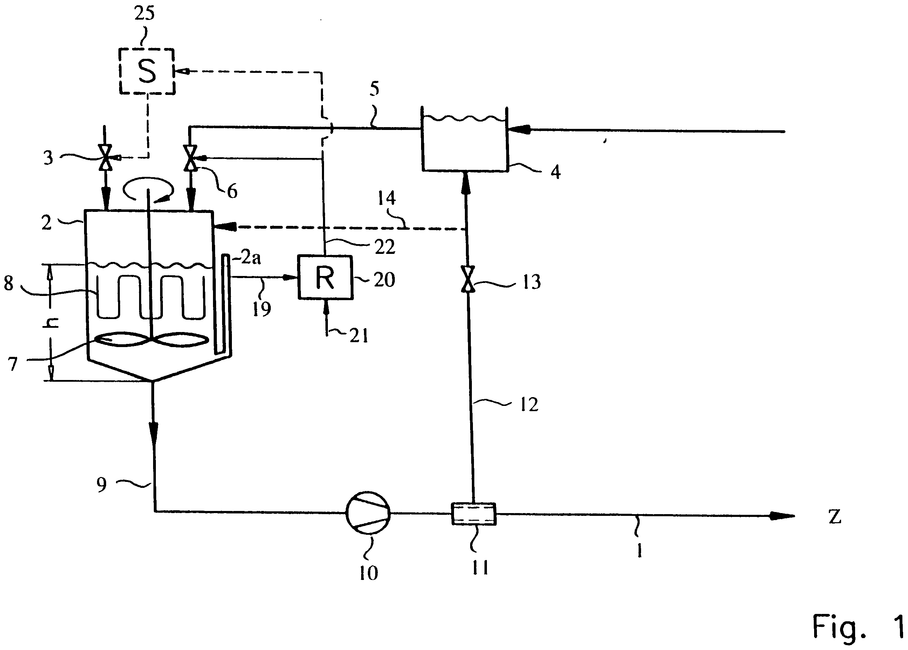

Figur 1 zeigt die anlagentechnische Ausrüstung am Aufgabeort eines hydraulisch über eine Förderleitung 1 zu einem nicht dargestellten, entfernten Zielort Z zu fördernden Schüttgutes. Die Anlage umfaßt einen Behälter 2, der bis zu einem Füllstand h mit einer Dispersion aus dem Schüttgut und einer Förderflüssigkeit gefüllt ist. Das Schüttgut wird in einer mittels eines geeigneten Dosierorgans 3, beispielsweise einer Zellenradschleuse, einstellbaren Menge in den Behälter 2 eingeleitet. Die benötigte Flüssigkeitsmenge wird einem Vorlagebehälter 4 entnommen und über eine Leitung 5 mit einem einstellbaren Schieber 6 in den Behälter 2 eingeleitet. Der Behälter enthält ein schematisch dargestelltes Rührwerk 7 und eine ebenfalls schematisch dargestellte Konditioniereinrichtung 8, z.B. eine Heizschlange.

Der Behälter 2 hat einen Bodenauslauf, der über eine Leitung 9 mit der Saugseite einer Förderpumpe 10, z.B. in Form einer Kreiselpumpe, verbunden ist. Die Druckseite der Förderpumpe 10 ist über ein Siebrohr 11 mit dem Anfang der zum Zielort Z führenden Förderleitung 1 verbunden. Das Siebrohr 11, an dessen Stelle auch eine vergleichbar arbeitende Vorrichtung Verwendung finden kann, dient zur Abscheidung und Entnahme eines Teils der Förderflüssigkeit, um die Dispersion aus dem Schüttgut und der Förderflüssigkeit aufzukonzentrieren. Der mittels des Siebrohres 11 entnommene Teil der Förderflüssigkeit wird über eine Leitung 12, in deren Zug sich ein Stellventil 13 befindet, in den Vorlagebehälter 4 zurückgeführt. Die Leitung 12 kann, wie durch den gestrichelten Leitungsabschnitt 14 angedeutet, auch unmittelbar in den Behälter 2 münden. Der Leitungsabschnitt 14 kann auch zusätzlich zu der in den Vorlagebehälter 4 mündenden Leitung 12 vorgesehen sein und zweigt dann, wie gezeichnet, stromab des Stellventils 13 von der Leitung 12 ab.

Der Füllstand des Behälters 2 wird, wie bei 2a angedeutet, mittels einer üblichen Meßvorrichtung überwacht, die ein entsprechendes Signal an den Istwerteingang 19 eines Reglers 20 abgibt, der bei 21 einen Sollwert erhält und ein Stellsignal an seinem Ausgang 22 liefert, das dem Stelleingang des Schiebers 6 zugeführt wird. Die auf diese Weise zum Ausgleich von Schwankungen des Füllstandes h erhöhte oder verminderte Zufuhr der Flüssigkeitsmenge führt zu einer entsprechenden, in der Regel allerdings geringen Verminderung oder Erhöhung der Konzentration der Dispersion in dem Behälter 2. Wenn diese Konzentrationsschwankungen vermieden werden sollen, kann das Stellsignal des Reglers 20, wie gestrichelt angedeutet, einer Steuerschaltung 25 zugeführt werden, die den zugeführten Schüttgutstrom über das Dosierorgan 3 verhältnisproportional gleichlaufend mit der Flüssigkeitsmenge erhöht oder vermindert.

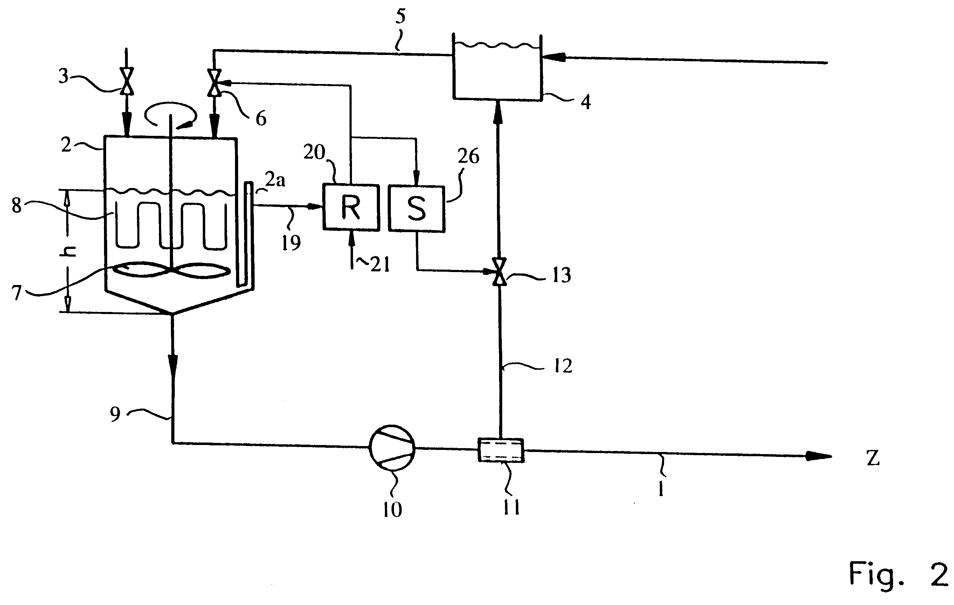

In der Ausführungsform nach Figur 2 umfaßt die Anlage bei sonst gleichem Aufbau wie in Figur 1 eine Steuerschaltung 26, die das Stellsignal des Reglers 20 erhält und daraus ein weiteres Stellsignal ableitet, das dem Stelleingang des Stellventils 13 in der Leitung 12 zugeführt wird. Da der Regler 20 bei sinkendem Füllstand h in dem Behälter 2 die zugeführte Flüssigkeitsmenge über den Schieber 6 erhöht, sinkt die Konzentration der Dispersion auf der Saugseite der Pumpe 10. Deshalb liefert die Steuerschaltung 26 an das Stellventil 13 ein dieses in Öffnungsrichtung verstellendes Signal, so daß sich der Volumenstrom des entnommmenen Teils der Förderflüssigkeit in der Leitung 12 erhöht, um dadurch die Konzentration der Dispersion am Eingang der Förderleitung 1 zu erhöhen bzw. wieder auf den gewünschten Wert zu bringen.

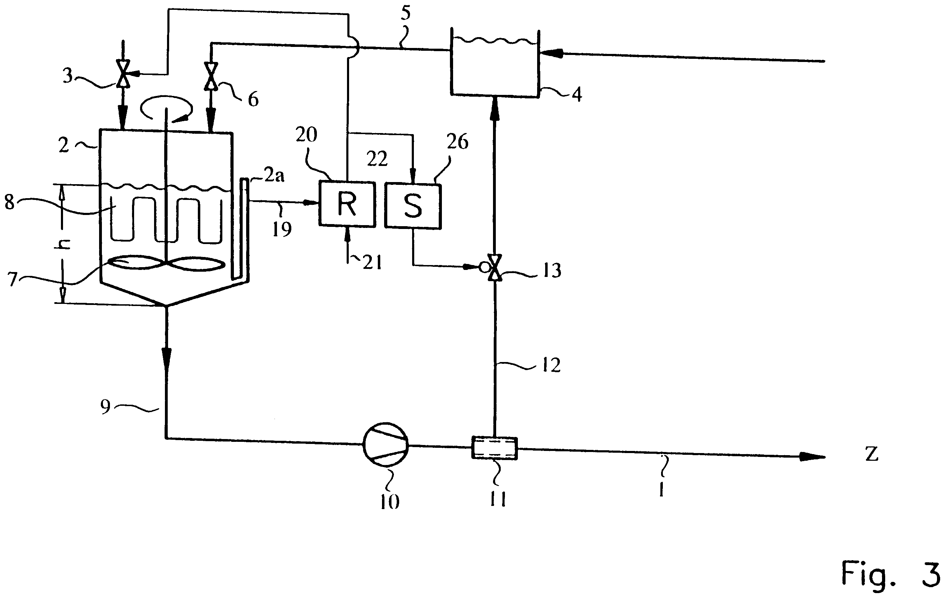

In der Ausführungsform nach Figur 3 wird hingegen das Stellsignal des Reglers 20 nicht dem Schieber 6 sondern dem Dosierorgan 3 zugeführt, der Füllstand h in dem Behälter 2 also durch Nachstellung des Schüttgutstroms konstant gehalten. Gleichzeitig wird das Stellsignal der Steuerschaltung 26 zugeführt, die jedoch nun bei sinkendem Füllstand h in dem Behälter 2 das Stellventil 13 in Schließrichtung verstellt und damit den Volumenstrom des entnommenen Teils der Förderflüssigkeit in der Leitung 12 gegensinnig zur Verstellung des Dosierorgans 3 ändert, wie durch das Kreissymbol an dem Stellventil 13 angedeutet.

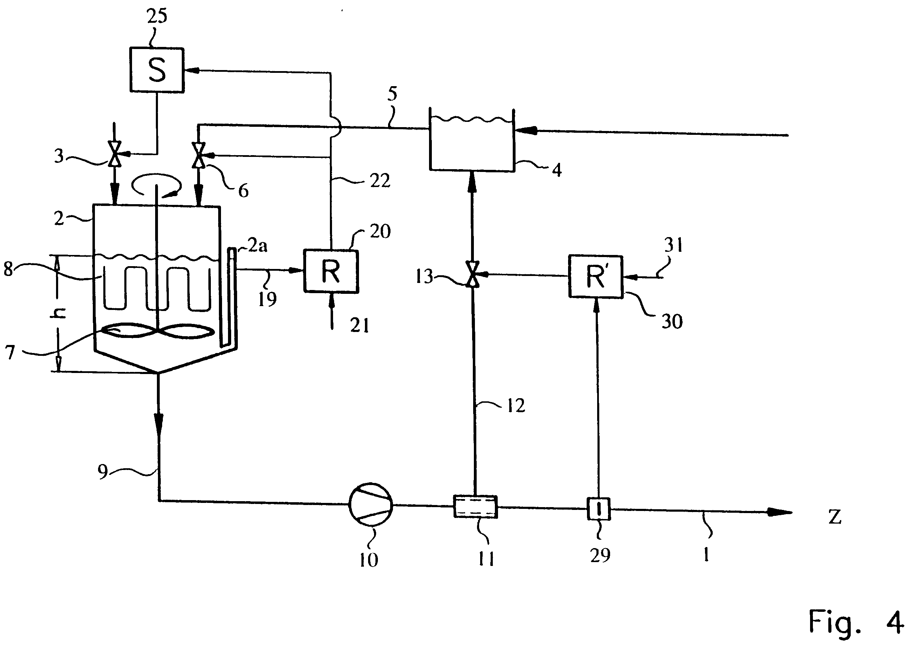

Figur 4 zeigt eine Ausführungsform, die im wesentlichen der Anlage nach Figur 1 einschließlich der Steuerschaltung 25 entspricht, jedoch zusätzlich einen weiteren Regelkreis zur Beeinflussung der Förderbedingungen in der Förderleitung 1 umfaßt. Dieser zusätzliche Regelkreis besteht aus einer Meßeinrichtung 29 die wahlweise den Granulatgehalt, den Volumenstrom der Dispersion oder den Druck am Anfang der Förderleitung 1 mißt und eine entsprechendes Signal an einen weiteren Regler 30 abgibt. Dieser Regler 30 erhält bei 31 die entsprechende Größe als Sollwert oder als Führungsgröße und verstellt das Stellventil 13, um den von der Meßvorrichtung 29 ermittelten Istwert in möglichst guter Übereinstimmung mit dem Sollwert bzw. der Führungsgröße zu halten. Für welche der genannten Größen die Meßvorrichtung 29 ausgelegt ist, richtet sich nach den Bedürfnissen der Praxis. Soll beispielsweise die maximale Förderkapazität der hydraulischen Förderleitung 1 möglichst gut ausgenutzt werden, kommt in erster Linie eine Messung und Regelung des Volumenstroms oder des Druckes in Betracht. Die Führungsgröße kann selbstverständlich auch von einem am Zielort Z ermittelten Parameter abgeleitet sein. In diesem Fall kann das Stellsignal des Reglers 30 zusätzlich auch zur Veränderung der Förderleistung der Förderpumpe 10 verwendet werden (nicht dargestellt).

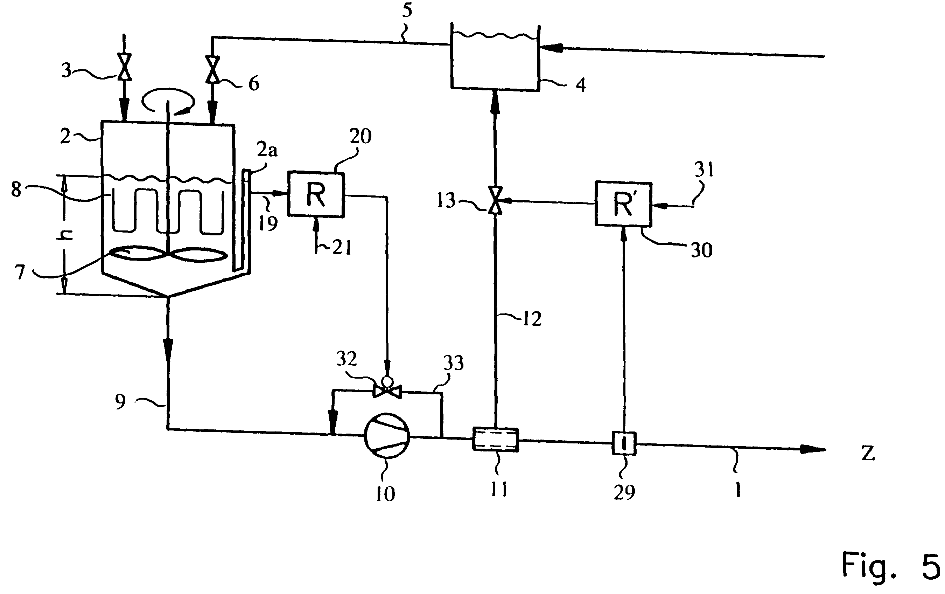

Figur 5 zeigt eine Ausführungsform der Anlage, bei der das Stellsignal des Reglers 20 zur Veränderung der Förderleistung der Förderpumpe 10 in Abhängigkeit von dem Füllstand h des Behälters 2 benutzt wird, im gezeichneten Beispiel durch Verstellung eines Bypassventils 32 in einer die Druckseite mit der Saugseite verbindenden Bypassleitung 33. Sinkt beispielsweise der Füllstand h, dann öffnet der Regler 20 das Bypassventil 32 und vermindert dadurch den Volumenstrom durch die Leitung 9.

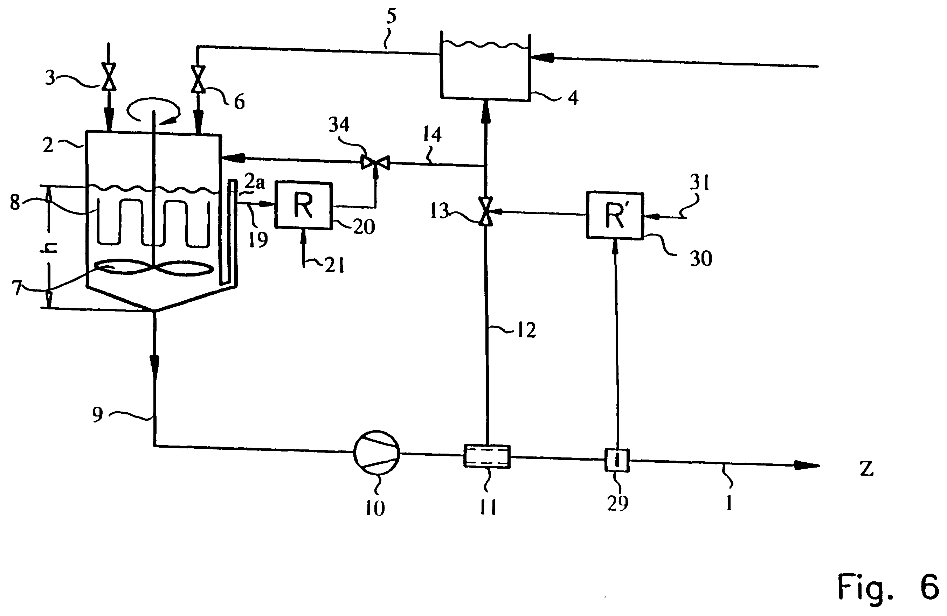

In Figur 6 wird das Stellsignal des Reglers 20 einem Stellventil 34 zugeführt, das sich im Zug der Leitung 14 befindet, die einen Teil des Volumenstroms an entnommener Förderflüssigkeit aus der Leitung 12 unmittelbar in den Behälter 2 zurückspeist. Wenn der in dem Behälter 2 über das Dosierorgan 3 eingeleitete Schüttgutstrom und die über den Schieber 6 eingeleitete Flüssigkeitsmenge im wesentlichen konstant sind, genügt die Regelung der über die Leitung 14 zugeführten Flüssigkeitsmenge, um den Füllstand h konstant zu halten. Als Stellglied kann somit das im Vergleich zu dem Schieber 6 wesentlich kleinere Stellventil 34 verwendet werden.

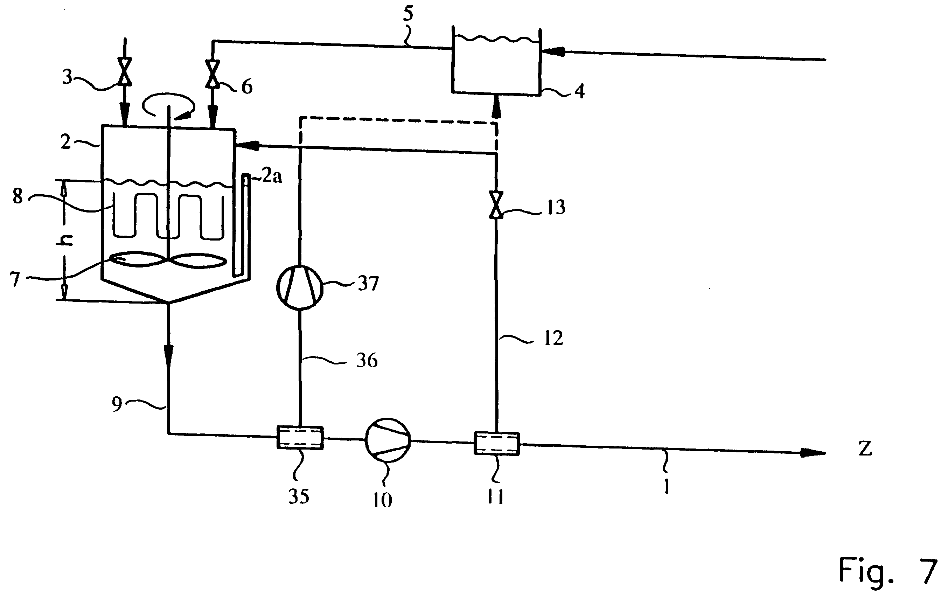

Figur 7 zeigt eine Ausführungsform der Anlage, die dann vorteilhaft ist, wenn die Konzentration der Dispersion in der Leitung 9 deutlich geringer als von der Förderpumpe 10 wirtschaftlich förderbare Konzentration ist. Der Behälter 2 ist hier nur symbolisch aufzufassen, weil eine Dispersion mit einem niedrigen Schüttgutgehalt das Ergebnis eines vorgeschalteten Prozessen, z.B. eines Granulierprozesses, sein kann. In diesem Fall ist in der Leitung 9 stromauf der Förderpumpe 10 ein weiteres Siebrohr 35 angeordnet, das der Dispersion stromauf der Förderpumpe 10 einen Teil der Förderflüssigkeit entzieht und über eine Leitung 36 abführt. Da die Dispersion in der Leitung 9 normalerweise weitgehend drucklos strömt, ist in diesem Fall in der Leitung 36 eine weitere Pumpe 37 erforderlich. Die Leitung 36 kann entweder mit der Leitung 14 oder, wie gestrichelt angedeutet, mit der Leitung 12 vereinigt werden. Die durch die Siebrohre 11 und 35 bewirkte, doppelte Aufkonzentration hat den Vorteil, daß sowohl die Förderpumpe 10 als auch die Förderleitung 1 in oder in der Nähe des optimalen Betriebspunktes gefahren werden können.

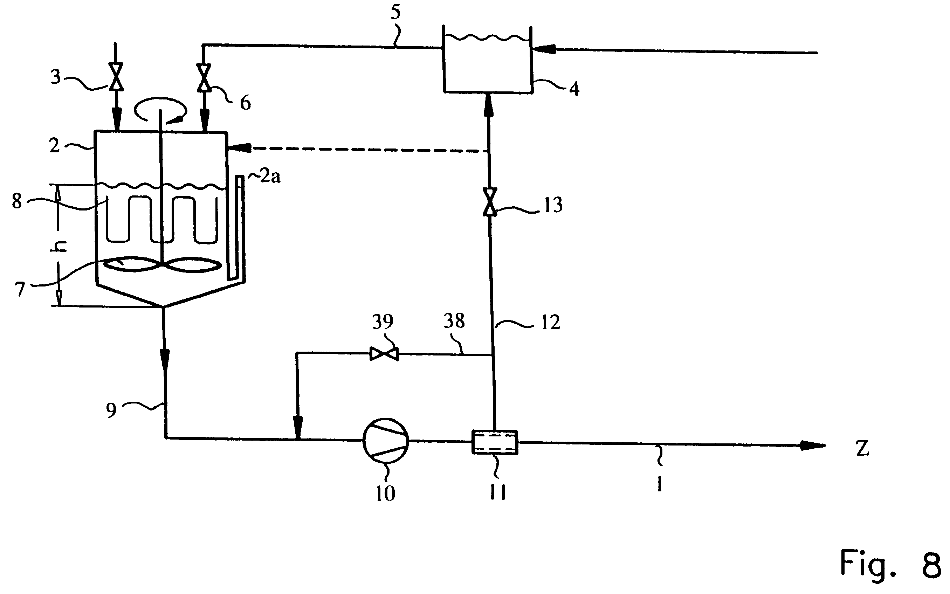

Figur 8 zeigt eine Ausführungsform der Anlage, bei der von der Leitung 12 eine Bypassleitung 38 abzweigt, in deren Zug sich ein einstellbares Ventil 39 befindet. Die Leitung 38 mündet in die Leitung 9 also auf der Saugseite der Förderpumpe 10. Auf diese Weise läßt sich die Schüttgutkonzentration stromauf der Förderpumpe 10 senken, sofern die Konzentration in der Leitung 9 prozessbedingt höher ist als der Förderpumpe 10 zuträglich.

## Patentansprüche

1. Verfahren zum hydraulischen Fördern eines Schüttgutes von einem Aufgabeort zu einem Zielort mittels einer Förderleitung durch Herstellen einer Dispersion aus dem Schüttgut und einer Förderflüssigkeit, anschließendes kontinuierliches Einspeisen der Dispersion in eine Förderpumpe, deren Druckseite mit dem Anfang der Förderleitung verbunden ist und Entnehmen eines Teils der Förderflüssigkeit zwischen der Förderpumpe und dem Anfang der Förderleitung.

2. Verfahren nach Anspruch 1, dadurch gekennzeichnet, daß zum Herstellen der Dispersion ein einstellbarer Schüttgutstrom und eine einstellbare Flüssigkeitsmenge kontinuierlich in einen Behälter eingeleitet werden, dessen Füllstand geregelt wird.

3. Verfahren nach Anspruch 1 oder 2, dadurch gekennzeichnet, daß der entnommene Teil der Förderflüssigkeit beim Herstellen der Dispersion erneut verwendet wird.

4. Verfahren nach Anspruch 2 oder 3, dadurch gekennzeichnet, daß das Volumen des Behälters als Puffervolumen verwendet wird.

5. Verfahren nach einem der Ansprüche 2 bis 4, dadurch gekennzeichnet, daß die Menge des entnommenen Teils der Förderflüssigkeit in Abhängigkeit von dem Füllstand des Behälters verändert wird.

6. Verfahren nach einem der Ansprüche 2 bis 5, dadurch gekennzeichnet, daß der Schüttgutstrom und die Flüssigkeitsmenge, die in den Behälter eintreten, einzeln oder gemeinsam in Abhängigkeit von dem Füllstand verändert werden.

7. Verfahren nach einem der Ansprüche 2 bis 6, dadurch gekennzeichnet, daß die Förderleistung der Förderpumpe in Abhängigkeit von dem Füllstand des Behälters verändert wird.

8. Verfahren nach einem der Ansprüche 2 bis 7, dadurch gekennzeichnet, daß die Förderleistung der Förderpumpe durch Verändern eines Bypasstroms in einem die Druckseite mit der Saugseite der Förderpumpe verbindenden Bypass verändert wird.

9. Verfahren nach einem der Ansprüche 2 bis 8, dadurch gekennzeichnet, daß der entnommene Teil der Förderflüssigkeit in zwei Volumenströme aufgeteilt wird, von denen einer dem Behälter zugeführt und in Abhängigkeit von dem Füllstand verändert wird.

10. Verfahren nach einem der Ansprüche 1 bis 9, dadurch gekennzeichnet, daß der Schüttgutgehalt der Dispersion stromab der Förderpumpe auf einen vorgegebenen Wert geregelt wird.

11. Verfahren nach einem der Ansprüche 1 bis 10, dadurch gekennzeichnet, daß der Druck der Dispersion stromab der Förderpumpe auf einen vorgegebenen Wert geregelt wird.

12. Verfahren nach einem der Ansprüche 1 bis 11, dadurch gekennzeichnet, daß der Volumenstrom der Dispersion stromab der Förderpumpe auf einen vorgegebenen Wert geregelt wird.

13. Verfahren nach einem der Ansprüche 10 bis 12, dadurch gekennzeichnet, daß die Regelgröße (Schüttgutgehalt, Druck, Volumenstrom) durch Verändern des entnommenen Teils der Förderflüssigkeit als Stellgröße geregelt wird.

14. Verfahren nach einem der Ansprüche 1 bis 13, dadurch gekennzeichnet, daß der Schüttgutgehalt der Dispersion stromauf der Förderpumpe auf einen vorgegebenen Wert geregelt wird.

15. Verfahren nach einem der Ansprüche 2 bis 14, dadurch gekennzeichnet, daß zwischen dem Behälter und der Förderpumpe ein weiterer Teil der Förderflüssigkeit entnommen wird.

16. Verfahren nach Anspruch 15, dadurch gekennzeichnet, daß der Schüttgutgehalt des weiteren, entnommenen Teils der Förderflüssigkeit auf einen vorgegebenen Wert geregelt wird.
